(19) Europäisches Patentamt
European Patent Office
Office européen des brevets

(11) **EP 4 357 131 A1**

(12) **EUROPEAN PATENT APPLICATION**

(43) Date of publication:
**24.04.2024 Bulletin 2024/17**

(21) Application number: **22202278.2**

(22) Date of filing: **18.10.2022**

(51) International Patent Classification (IPC):
**B32B 27/32** *(2006.01)* **B32B 27/08** *(2006.01)*
**B65D 65/40** *(2006.01)*

(52) Cooperative Patent Classification (CPC):
**B32B 27/32; B32B 27/08;** B32B 2250/03;
B32B 2250/05; B32B 2250/24; B32B 2250/246;
B32B 2307/31; B32B 2307/406; B32B 2307/408;
B32B 2307/50; B32B 2307/516; B32B 2307/54;
B32B 2307/544; B32B 2307/546; B32B 2307/72;

(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Abu Dhabi Polymers Co. Ltd (Borouge) LLC Abu Dhabi (AE)**
• **Borealis AG 1020 Vienna (AT)**

(72) Inventors:
• **DAS, Subrata Kumar Abu Dhabi (AE)**
• **SHARMA, Kamal Abu Dhabi (AE)**
• **SIONG, Lim Chee Singapore (SG)**

(74) Representative: **Kador & Partner Part mbB Corneliusstraße 15 80469 München (DE)**

(54) **HIGH-STIFF ORIENTED POLYETHYLENE FILM FOR SUSTAINABLE PACKAGING**

(57) An uniaxially oriented polyethylene film, comprising multiple layers including an inner surface layer (I), an outer surface layer (O) and a core layer (C), wherein at least one of the inner surface layer (I) and the outer surface layer (O) is made of a composition comprising a multimodal linear low density ethylene (LLDPE) terpolymer component (PE1) with a density between 920 to 940 kg/m$^3$, in an amount of from 30 to 100 wt.% of based on the total weight of the respective layer composition; wherein at least two of the multiple layers are made of a composition comprising a multimodal HDPE component (PE2) with a density of more than 950 kg/m$^3$ up to 970 kg/m$^3$. A laminate or an article comprising the polyethylene film as described herein, wherein the article is a packaging material. Use of the polyethylene film or the laminate as described herein for packaging of articles. A food package comprising the polyethylene film or the laminate as described herein.

Figure 1

| O (outer surface layer) | |
|---|---|
| O1 (sub-outer surface layer) | |
| C (core layer) | MDO PE film |
| I1 (sub-inner surface layer) | |
| I (inner surface layer) | |

EP 4 357 131 A1

(52) Cooperative Patent Classification (CPC): (Cont.)
B32B 2439/06; B32B 2439/70

**Description**

The present invention relates to a uniaxially oriented polyethylene film wherein at least one of the inner surface layer (I) and the outer surface layer (O) is made of a composition comprising a multimodal linear low density ethylene (LLDPE) terpolymer component (PE1) and wherein two of the multiple layers are made of a composition comprising a multimodal HDPE component (PE2), a laminate and an article comprising the polyethylene film, the use of the polyethylene film or the laminate for packaging an article and a food package comprising the polyethylene film or the laminate.

Conventional blown or cast polyethylene films are widely used in flexible packaging, either as stand-alone packaging or lamination films, such as stand-up pouches, detergent pouches, sachets, bags, heavy duty shipping sacks etc. In conventional flexible packaging, multiple polymers are used to make laminates consisting of polyester (BOPET) or polyamides (BOPA) or polypropylene (BOPP / CPP) as substrates; and blown / cast polyethylene based films as sealants to have better seal integrity. These asymmetric laminates were designed to achieve challenging requirements on Form, Fill & Seal (FFS) lines and shelf life of the products. Substrate films are generally employed for stiffness, optical and barrier-related properties to ensure improved shelf life of packed goods and their subsequent handling and operation especially during packaging on FFS machines. With increased focus on sustainability of laminates, it is very important that the laminates are designed in such a way that they should be recyclable. This brings huge challenge for the whole flexible packaging industry to replace high performance material like BOPET and BOPP with existing or new designed polyethylene films.

If compared to PET, BOPP and BOPA substrates, polyethylene substrates often suffer from lower stiffness, poorer optical properties and poorer heat resistance. Orientation (i.e. stretching) of (substrate) films, such as preparation of machine direction oriented (MDO) films, is one approach to provide stiffness and optical properties to polyethylene films.

Numerous efforts have been made to explore alternative MDO film designs with well-balanced overall performance. However, room for improvements in terms of the above described properties of the multilayer films still remains. In response to this growing trend, it is important to improve the polyethylene substrate by using high performance polyethylene resin together with new stretching technologies. Thus, although laminate structures based on high contents of polyethylene and MDO polyethylene film designs are well known, there is a steady need to further improve the properties of polyethylene films to match the performance of the commonly used PET, BOPP and BOPA substrates.

It is an object of the present invention to provide an oriented polyethylene film with improved optical properties, such as low haze and high gloss. It is also an object of the present invention to provide a polyethylene film having the desired combination of properties as outlined above, in particular having superior stiffness with enhanced gloss, lower haze, very good heat resistance (SIT) and preferably also improved moisture barrier properties.

The present invention is based on the surprising finding when using a particular multimodal linear low density ethylene terpolymer component in one or both of the surface layers of MDO films, it is possible to achieve an extremely high gloss and low haze polyethylene MDO film, while maintaining high stiffness and tensile strength.

In particular, it has surprisingly been found that the presence of a multimodal HDPE component in at least two of the multiple layers of the film and the multimodal linear low density ethylene terpolymer component being comprised in at least one of the surface layers, polyethylene MDO films can be produced, which provide excellent optical properties (low haze, high gloss) and good mechanical strength (tensile modulus), along with high heat resistance - in terms of heat seal initiation temperature at 5N of above 122°C - and good barrier properties, especially good moisture barrier properties.

The invention therefore provides an uniaxially oriented polyethylene film, comprising multiple layers including an inner surface layer (I), an outer surface layer (O) and a core layer (C),

wherein at least one of the inner surface layer (I) and the outer surface layer (O) is made of a composition comprising a multimodal linear low density ethylene (LLDPE) terpolymer component (PE1) with a density between 920 to 940 kg/m$^3$, in an amount of from 30 to 100 wt.% of based on the total weight of the respective layer composition;

wherein at least two of the multiple layers are made of a composition comprising a multimodal HDPE component (PE2) with a density of more than 950 kg/m$^3$ up to 970 kg/m$^3$.

The polyethylene film of the present invention is characterized by superior optical properties and stiffness. It has further high tensile strength, as well as high heat resistance and improved barrier properties. Laminates prepared from the polyethylene film can run smoothly on FFS machines without any significant modification of existing FFS equipment and satisfying customer needs for aesthetic appearance, shelf life and sustainability.

The expression "polyethylene film" denotes a film that comprises or consists of at least one type of ethylene polymer. The polyethylene film may comprise ethylene homopolymers and ethylene copolymers, containing one or more types of comonomers.

Preferably, the polyethylene film comprises at least 85 wt.% of at least one type of ethylene polymer (including ethylene homopolymers and/or ethylene copolymers), based on the total weight of the polyethylene film. More preferably, the polyethylene film comprises from 90 to 100 wt.%, still more preferably from 95 to 100 wt.% and most preferably from 98 to 100 wt.% of at least one type of ethylene polymer, based on the total weight of the polyethylene film.

In a preferred embodiment the polyethylene film consists of ethylene homopolymers and/or ethylene copolymers.

As is understood within the meaning of this disclosure, the polyethylene film and its respective layers and compositions for layer preparation may also comprise additives, stabilizers, processing aids and/or pigments. Examples of such compounds are antioxidants, UV stabilizers, acid scavengers, nucleating agents, anti-blocking agents, slip agents etc. as well as polymer processing agents (PPA). The compounds may be present in some or only in one layer of the polyethylene film, in the same or different contents. Generally, the compounds are present at 0 to 5 wt.%, based on the weight of the respective composition used for the preparation of the layers or the respective layer of the film.

The percentage (%) is to be understood as weight percentage (wt.%) within the meaning of this disclosure, unless otherwise indicated.

It is also understood within the meaning of this disclosure that the below described embodiments may be combined.

According to the invention, the polyethylene film is uniaxially oriented. A "uniaxially-oriented" film refers to a film that has been stretched in a single direction e.g., in only the machine direction (MD) or in only the transverse-direction (TD). Preferably, the film has been stretched in the machine direction (MD), resulting in a machine direction oriented (MDO) film.

Layer thickness distribution of the non-oriented (primary) film is usually the same as the layer thickness distribution of the oriented film.

Oriented films are produced by orienting (stretching) a non-oriented film (primary film) by a certain stretch or draw ratio to achieve the final thickness of the oriented film. Orientation can take place in both in-line and off-line stretching lines, preferably in-line stretching is used.

The ratio of the film thickness before and after orientation is called "drawdown ratio." The drawdown ratio varies depending on many factors including the desired film thickness, film properties, and multilayer film structures. The preparation process of an uniaxially oriented in MD multilayer film of the invention comprises at least the steps of forming a layered film structure and stretching the obtained multilayer film in the machine direction in a draw ratio of at least 1:4 up to 1:12, preferably 1:4.2 to 1:10 and more preferably 1:4.5 to 1:8.

The film is stretched at least 4 times up to 12 times, its original length in the machine direction. This is stated herein as a draw ratio of at least 1:4, i.e. "1" represents the original length of the film and "4" denotes that it has been stretched to 4 times that original length. An effect of stretching (or drawing) is that the thickness of the film is similarly reduced. Thus a draw ratio of at least 1:4 preferably also means that the thickness of the film is at least four times less than the original thickness of primary film.

The films according to the invention preferably have an original primary film thickness of 80 to 200 $\mu$m before stretching, more preferably 90 to 190 $\mu$m and most preferably 100 to 180 $\mu$m. After stretching, the final thickness of the uniaxially oriented films according to this invention is typically in the range 12 to 40 $\mu$m, preferably 14 to 37 $\mu$m, and more preferably 15 to 35 $\mu$m.

Unless otherwise indicated, it is referred to the uniaxially oriented polyethylene film when using the expression "polyethylene film" or "film" in this disclosure. The non-oriented polyethylene film is referenced by the expression "primary film". However, many specifications such as the sequence of layers or their thickness distribution or compositions are similar for both the oriented and non-oriented films, and the respective disclosure applies to both films.

The polyethylene film has a tensile modulus (1% secant) in machine direction (MD) of at least 1500 MPa, preferably at least 1600, even more preferably at least 1700 MPa, determined according to ASTM D882. The polyethylene film may have a tensile modulus (1% secant) in machine direction (MD) of from 1500 to 3200 MPa, more preferably of from 1600 to 3000 MPa and most preferably of from 1700 to 2800 MPa, determined according to ASTM D882.

The polyethylene film has a tensile strength (also tensile stress at break) in machine direction (MD) of at least 160 MPa, preferably at least 165 MPa, determined according to ISO 527-3. The polyethylene film may have a tensile strength in machine direction (MD) of from 160 to 300 MPa, more preferably of from 165 to 280 MPa, determined according to ISO 527-3.

The polyethylene film comprises multiple layers including an inner surface layer (I), an outer surface layer (O) and a core layer (C). Preferably, the film further comprises additional layers such as a sub-inner surface layer (11) and/or a sub-outer surface layer (O1), wherein the sub-inner surface layer (I1) is present between the inner surface layer (I) and the core layer (C), and the sub-outer surface layer (O1) is present between the outer surface layer (O) and the core layer (C). Optionally, the film comprises more than one of any of the layers O, O1, C, 11 or I.

The polyethylene film preferably comprises, or consists of, from 3 to 9 layers, more preferably from 3 to 7 layers, and most preferably from 4 to 6 layers, such as 5 layers.

The polyethylene film may be symmetric or asymmetric. A symmetric film is one in which the layers, from the outermost layer to inward layer, comprise equal layer compositions on each side of the film. Symmetric films may be preferred due to their ease of manufacturing and equal properties from both sides. Asymmetric films may be preferred for some applications where selected properties of the inner surface layer may differ from those of the outer surface layer.

Examples of possible film layer sequences are: I/I1/C/I1/I; O/O1/C/I1/I; O/O/O1/C/I1/I/I; I/I/I1/C/I1/I/I; O/O1/O1/C/I1/I1/I; I/I/I1/C/I1/I1/I; O/O/C/C/C/I/I; I/I/C/C/C/I/I; O/O/O1/O1/C/I1/I1/I/I; I/I/I1/I1/C/I1/I1/I/I.

In a preferred embodiment of the invention, the film is a symmetric film comprising 5 layers with the sequence of layers: I/I1/C/I1/I or O/O1/C/O1/O.

In a further preferred embodiment of the invention, the film is an asymmetric film comprising 5 layers with the sequence of layers: O/O1/C/I1/1.

The layers in the oriented film may have similar or different thickness, preferably ranging from 1 to 15 μm. The layer thickness distribution of multilayer films has influence on both the processability and the performance of the film. For examples, the thickness of the external layers, such as the inner surface layer (I), may influence heat resistance of the film and optical properties (e.g. gloss), whereas the thickness of all layers, such as the core layer (C), may have influence on the mechanical properties of the film. Bubble stability and stretch-ability of a multilayer film may be influenced by the thickness of the core layer (C). Further, the thickness of the layer comprising the PE1 component may have an impact on the overall mechanical properties of the film, in particular stiffness and tensile modulus, and also on optical properties of the film.

The thickness of each of the layers O, I, C, O1, 11, independently of each other, preferably makes from 5 to 40% of the total thickness of the film.

The thickness of the outer surface layer (O) preferably makes up to 25%, more preferably from 5 to 20%, and most preferably from 10 to 20% of the total thickness of the film.

The thickness of the inner surface layer (I) preferably makes at least 10%, more preferably from 5 to 25%, and most preferably from 10 to 20% of the total thickness of the film.

Layer thickness distribution of the non-oriented (primary) film is usually the same as the layer thickness distribution of the oriented film.

In one embodiment, the thickness of the inner surface layer (I) of the oriented film is at least 2 μm, preferably at least 2.5 μm. Preferably, the inner surface layer (I) thickness is up to 15 μm, more preferably up to 12, still more preferably up to 10 and most preferably up to 8, such as up to 6 μm.

### PE1 component

At least one of the inner surface layer (I) and the outer surface layer (O) is made of a composition comprising a multimodal linear low density ethylene (LLDPE) terpolymer component (PE1) with a density between 920 to 940 $kg/m^3$, in an amount of from 30 to 100 wt.% of based on the total weight of the respective layer composition.

PE1 of the layered film structure of the invention preferably comprises, or consists of, a multimodal polymer of ethylene with at least two different comonomers selected from alpha-olefins having from 4 to 10 carbon atoms.

Such multimodal ethylene terpolymers are disclosed, for example, in WO 2016/083208. As far as definitions (such as for the "modality" of a polymer) and production methods for these ethylene terpolymers are concerned it is referred to WO 2016/083208. Furthermore, all embodiments and preferred embodiments of such ethylene terpolymers as described in WO 2016/083208 which have a density in the range a density of 910 to 935 $kg/m^3$ are also preferred embodiments of PE1 in the present application, whether or not explicitly described herein.

PE1 preferably has a $MFR_2$ in the range of from 0.5 to 2.0 g/10 min, more preferably of from 0.7 to 1.8 g/10 min, still more preferably from 1.0 to 1.6 g/10 min.

Preferably, PE1 has a density of 922 to 937 $kg/m^3$, more preferably of 925 to 935 $kg/m^3$.

PE1 preferably has a ratio $MFR_{21}/MFR_2$ of 13 to 30, more preferably from 15 to 30, still more preferably of 15 to 25.

PE1 preferably has a molecular weight distribution (MWD) of 5 or less.

The at least two alpha-olefin comonomers having from 4 to 10 carbon atoms of PE1 are preferably 1-butene and 1-hexene.

Preferably, the total amount of comonomers present in the PE1 is of 0.5 to 10 mol%, preferably of 1.0 to 8 mol%, more preferably of 1.0 to 5 mol%, more preferably of 1.5 to 5.0 mol%.

More preferably, the multimodal linear low density ethylene terpolymer component (PE1) is a terpolymer of ethylene, 1-butene and 1-hexene having a 1-butene content of from 0.1 to 5.0 wt.-%, preferably from 0.2 to 3.5 wt.-%, more preferably from 0.3 to 2.0 wt.-% and a 1-hexene content of from 2.0 to 14.9 wt.-%, preferably from 2.5 to 12.3 wt.-%, more preferably from 3.0 to 9.7 wt.-%, based on the total weight of the multimodal linear low density ethylene terpolymer component (PE1).

PE1, which preferably is a bimodal terpolymer, preferably comprises, or consists of, an ethylene polymer component (A) and an ethylene polymer component (B), wherein the ethylene polymer component (A) has higher $MFR_2$ than ethylene polymer component (B).

More preferably, the ethylene polymer component (A) has $MFR_2$ of 1 to 50 g/10 min, preferably of 1 to 40 g/10 min, more preferably of 1 to 30 g/10 min, more preferably of 2 to 20 g/10 min, more preferably of 2 to 15 g/10 min, and even more preferably of 2 to 10 g/10 min.

The ratio of the $MFR_2$ of ethylene polymer component (A) to the $MFR_2$ of the ethylene polymer component (B) is 2 to 50, preferably 5 to 40, more preferably 10 to 30, more preferably 10 to 25, and still more preferably 15 to 25.

Further, the ratio of the $MFR_2$ of ethylene polymer component (A) to the $MFR_2$ of the final PE1 is preferably in the range from 1 to 15, more preferably of 1.5 to 12, more preferably of 2 to 10, most preferably of 3 to 8.

If the $MFR_2$ of ethylene polymer component (B), cannot be measured, because it cannot be isolated from the mixture of at least ethylene copolymers (A) and ethylene polymer component (B), then it can be calculated using a log mixing rule.

Naturally, in addition to multimodality with respect to, i.e. difference between, the MFR of the ethylene polymer component (A) and ethylene polymer component (B), the multimodal terpolymer of ethylene (PE1) can also be multimodal e.g. with respect to one or both of the two further properties:

multimodality with respect to, i.e. difference between the comonomer type or the comonomer content(s) present in the ethylene polymer component (A) and ethylene polymer component (B), or both the type and content(s) of comonomers present in the ethylene polymer component (A) and ethylene polymer component (B); and/or the density of the ethylene polymer component (A) and ethylene polymer component (B).

Preferably, the multimodal copolymer of ethylene (PE1) is further multimodal with respect to comonomer type and/or comonomer content (mol-%), preferably wherein the alpha-olefin comonomer having from 4 to 10 carbon atoms of ethylene polymer component (A) is different from the alpha-olefin comonomer having from 4 to 10 carbon atoms of ethylene polymer component (B), preferably wherein the alpha-olefin comonomer having from 4 to 10 carbon atoms of ethylene polymer component (A) is 1-butene and the alpha-olefin comonomer having from 4 to 10 carbon atoms of ethylene polymer component (B) is 1 -hexene.

The comonomer content of ethylene polymer component (A) and ethylene polymer component (B) can be measured, or, in case, and preferably, one of the components is produced first and the other thereafter in the presence of the first produced in so called multistage process, then the comonomer content of the first produced copolymer, e.g. ethylene polymer component (A), can be measured and the comonomer content of the other copolymer, e.g. ethylene polymer component (B), can be calculated according to following formula:

*Comonomer content (mol-%) in ethylene polymer component (B) = (comonomer content (mol-%) in final product PE1 - (weight fraction of polymer component (A) \* comonomer content (mol-%) in component (A)) / (weight fraction of ethylene polymer component (B)*

Ethylene polymer component (A) and ethylene polymer component (B) can be produced in the same or different reactors.Preferably, ethylene polymer component (A) comprises a different comonomer than the ethylene polymer component (B).

Preferably, ethylene polymer component (A) has lower amount (mol%) of comonomer than ethylene polymer component (B), more preferably, the ratio of [the amount (mol%) of alpha-olefin comonomer having from 4 to 10 carbon atoms comonomer present in ethylene polymer component (A)] to [the amount (mol%) of at least two alpha-olefin comonomers having from 4 to 10 carbon atoms of the final multimodal polymer of ethylenePE1] is of 0.2 to 0.6, preferably of 0.25 to 0.5.

Preferably, the alpha-olefin comonomer having from 4 to 10 carbon atoms of ethylene polymer component (A) is 1-butene and the alpha-olefin comonomer having from 4 to 10 carbon atoms of ethylene polymer component (B) is 1-hexene.

Preferably, ethylene polymer component (A) has different, preferably higher, density than the density of the ethylene polymer component (B).

The density of the ethylene polymer component (A) is preferably 925 to 950 kg/m$^3$, more preferably 930 to 945 kg/m$^3$, most preferably 935 to 940 kg/m$^3$.

Preferably, the PE1 comprises the ethylene polymer component (A) in an amount of 30 to 70 wt.-%, preferably of 40 to 60 wt.-%, more preferably of 35 to 50 wt.-%, more preferably 40 to 50 wt.-% and the ethylene polymer component (B) in an amount of 70 to 30 wt.-%, preferably of 60 to 40 wt.-%, more preferably of 50 to 65 wt.-%, more preferably 50 to 60 wt.-%, based on the total amount (100 wt.-%) of the multimodal terpolymer PE1.

Most preferably, PE1 consists of the ethylene polymer components (A) and (B) as the sole polymer components. Accordingly, the split between ethylene polymer component (A) to ethylene polymer component (B) is of (30 to 70):(70 to 30) preferably of (40 to 60):(60 to 40), more preferably of (35 to 50):(65 to 50), more preferably of (40 to 50):(50 to 60).

Preferred as PE1 component are also such polymers as commercially available as Anteo™ from Borealis or Borouge having the properties as required herein, especially Anteo™ FK 2715.

At least one, preferably both, of the inner surface layer (I) and the outer surface layer (O) is (are) made of a composition comprising a multimodal linear low density ethylene (LLDPE) terpolymer component (PE1).

Thus, the PE1 component is present in at least one of the surface layers of the polyethylene film. Preferably, the PE1 component is present in both the inner surface layer (I) and the outer surface layer (O) of the polyethylene film.

The PE1 component may be present in all layers of the film, thus, depending on the film structure, in 5, 6, 7, 8 or 9 layers of the polyethylene film. The contents of the PE1 component in the respective layers may be the same or different.

Preferably, the inner surface layer (I) and/or the outer surface layer (O) are made of a composition comprising from 30 to 100 wt.% of the PE1 component based on the total weight of the composition in the respective layer, wherein the contents of the PE1 components may be the same or different.

Preferably, the PE1 component is at least present in the outer surface layer (O).

More preferably, the inner surface layer (I) of the polyethylene film is made of a composition comprising from 0 to 85 wt.%, preferably from 0 to 84 wt.%, more preferably from 0 to 83 wt.%, still more preferably from 10 to 80 wt.% of the PE1 component, based on the total weight of the respective layer composition.

More preferably, the outer surface layer (O) of the polyethylene film is made of a composition comprising from 55 to 100 wt.%, preferably from 56 to 100 wt.%, more preferably from 57 to 100 wt.%, still more preferably from 58 to 100 wt.% of the PE1 component, based on the total weight of the respective layer composition.

The PE1 component may influence the optical properties of the polyethylene film, in particular haze and gloss, while tensile properties of the film are essentially not negatively impacted. Accordingly, depending on the required optical properties, the presence of the PE1 component in the layers and/or its content may be adjusted.

As the PE1 component provides great heat seal properties and optical properties such as gloss, it confers particularly good effects when used in the inner surface layer (I) and/or outer surface layer (O).

### PE2 component

At least two of the multiple layers are made of a composition comprising a multimodal high density polyethylene (HDPE) polymer component (PE2), preferably at least two of the multiple layers are made of a composition consisting of the PE2 component.

The PE2 component has a melt flow rate $MFR_2$ of from 0.1 to 2.0 g/10min, preferably from 0.3 to 1.5 g/10min, more preferably from 0.5 to 1.2 g/10min and most preferably from 0.5 to 0.9 g/10min.

The PE2 component has a melt flow rate $MFR_5$ of from 1.0 to 5.0 g/10min, preferably 1.3 to 4.5 g/10min, more preferably 1.7 to 4.0 g/10min and most preferably, 2.0 to 3.5 g/10min.

The PE2 component has a (melt) flow rate ratio $FRR_{21/2}$ ($MFR_{21}/MFR_2$) of from 30 to 90, preferably from 35 to 85 and most preferably from 40 to 80. All melt flow rates are determined according to ISO 1133.

The PE2 component has a density of more than or equal to 950 kg/m3, preferably more than or equal to 951, more preferably more than or equal to 953 and most preferably more than or equal to 955, such as more than or equal to 956 kg/m$^3$. Usually, the PE2 component has a density of up to 970, preferably up to 969, more preferably up to 968 and most preferably up to 967 kg/m$^3$.

The PE2 component has a molecular weight distribution (Mw/Mn) of from 8 to 20, more preferably from 9 to 18 and most preferably from 10 to 15, determined according to ISO 16014.

The multimodal high density polyethylene (HDPE) polymer component (PE2) is preferably a bimodal HDPE. High density polyethylenes (HDPE) are well known in the art and are produced in polymerization processes using a catalyst.

The HDPE preferably has a density of from 955 to 968 kg/m$^3$, more preferably of from 958 to 965 kg/m3. Such multimodal HDPE and their production are, for example, described in WO 2020/109289, pages 19 to 28, to which it is referred.

Preferably, the HDPE is an ethylene copolymer. An ethylene copolymer is a polymer which comprises ethylene monomer and one or more comonomer(s). The comonomer can be alpha-olefins having 4 to 12 carbon atoms, e.g. 1-butene, 4-methyl-1-pentene, 1-hexene, 1-octene, 1-decene. More preferably, the HDPE is a copolymer of ethylene and 1-butene, 1-hexene or 1-octene, most preferably 1-butene.

In a particularly preferred embodiment, the HDPE comprises, or consists of, a lower molecular weight (LMW) component and a higher molecular weight (HMW) component; wherein the LMW component is an ethylene homopolymer having a density of from 965 to 975 kg/m$^3$ and the HMW component is an ethylene copolymer of ethylene with at least one C4 to C12 alpha-olefin, having a density of from 935 to 955 kg/m$^3$.

Preferably, the total amount of comonomers present in the HDPE is of from 0.0 to 0.40 mol%, more preferably from 0.01 to 0.30 mol%, and most preferably from 0.02 to 0.20 mol%.

Preferably, the HDPE has an $MFR_2$ of from 0.25 to 1.8 g/10min, more preferably from 0.3 to 1.5 g/10min, still more preferably from 0.4 to 1.0 g/10min, and most preferably from 0.5 to 0.9 g/10min.

In particularly preferred embodiments, the HDPE has an $MFR_2$ of from 0.5 to 0.9 g/10min, and/or an $MFR_5$ of from 2.0 to 3.5 g/10min and/or an $MFR_{21}$ of from 30 to 60 g/10min, and/or a density of from 958 to 965 kg/m$^3$, and/or a molecular weight distribution (MWD) of from 10 to 15, and/or an Mn of from 7 to 12 kg/mol, and/or an Mw of from 90 to 165 kg/mol, and/or an $MFR_{21}/MFR_2$ ratio ($FRR_{21/2}$) of from 40 to 80 and/or an $MFR_{21}/MFR_5$ ratio ($FRR_{21/5}$) of from 10 to 25.

For all catalytically produced polymers described herein, all molecular weight parameters are measured by the GPC conventional method as further described in detail below. Comonomer content is measured by NMR spectroscopy as further described below.

As the multimodal HDPE component, resin Borstar FB5600 as produced by Borouge may be used.

At least two of the multiple layers of the polyethylene film are made of a composition comprising the PE2 component.

Thus, the PE2 component is present in at least two of the multiple layers of the polyethylene film. Preferably, the PE2 component is present in at least 3 layers of the polyethylene film. The PE2 component may be present in all layers of the film, thus, depending on the film structure, in 5, 6, 7, 8 or 9 layers of the polyethylene film. The contents of the PE2 component in the respective layers may be the same or different.

The PE2 component may be present in any one or all of the inner surface layer (I), outer surface layer (O), core layer (C), sub-inner surface layer (11) and/or sub-outer surface layer (O1). For example, the PE2 component is present in layers 11 and I, or layers 11 and O1, or layers I and O1, or layers I, C and O1, or layers 11, C and O1, or layers I1, O1 and I, or layers 11, C, O1 and I.

Preferably, the PE2 component is at least present in layers O1, I1, I and optionally C.

The PE2 component has influence on the bubble stability, stretch-ability of the polyethylene film and overall stiffness (tensile modulus) of the film.

In one embodiment, the inner surface layer (I) is made of a composition comprising from 10 to 100 wt.% of the PE2 component, more preferably from 15 to 100 wt% based on the total weight of the composition of the inner surface layer (I).

Preferably, both the inner surface layer (I), sub-inner surface layer (I1) and/or the sub-outer surface layer (O1) are made of a composition comprising from 15 to 100 wt.% of the PE2 component, more preferably from 20 to 100 wt.% of the PE2 component, based on the total weight of the composition of the respective layer, wherein the contents of the PE2 component are the same or different.

More preferably, the sub-inner surface layer (I1) and/or the sub-outer surface layer (O1) are made of a composition comprising from 60 to 100 wt.% of the PE2 component, preferably from 70 to 100 wt.% and more preferably from 75 to 100 wt.% of the PE2 component, based on the total weight of the composition of the respective layer, wherein the contents of the PE2 component are the same or different.

### PE3 component

In one embodiment, at least one of the multiple layers is made of a composition comprising from 60 to 100 wt.%, preferably from 70 to 95 wt.%, of a multimodal polyethylene component (PE3), based on the total weight of the respective layer composition, having a density of from 925 to 945 kg/m$^3$ and preferably a melt flow rate ($MFR_2$) of from 0.05 to 0.5 g/10min, determined according to ISO 1133.

The multimodal polyethylene PE3 component is a multimodal linear medium density polyethylene MDPE, preferably a bimodal MDPE. Medium density polyethylenes (MDPE) are well known in the art and are produced in polymerization processes using a catalyst.

Such multimodal MDPE and their production are, for example, described in WO 2017/021389 A1 for linear ethylene polymers, pages 8 to 10, to which it is referred.

Preferably, the MDPE component comprises an ethylene copolymer. An ethylene copolymer is a polymer which comprises ethylene monomer and one or more comonomer(s). The comonomer can be alpha-olefins having 4 to 12 carbon atoms, e.g. 1-butene, 4-methyl-1-pentene, 1-hexene, 1-octene, 1-decene. More preferably, the MDPE is a copolymer of ethylene and 1-butene or 1-hexene, most preferred 1-butene.

Preferably, the MDPE component comprises, or consists of, an ethylene copolymer. The comonomer can be alpha-olefins having 4 to 12 carbon atoms, e.g. 1-butene, 4-methyl-1-pentene, 1-hexene, 1-octene, 1-decene. More preferably, the MDPE comprises, or consists of, a copolymer of ethylene and 1-butene or 1-hexene, most preferably 1-butene.

Preferably, the total amount of comonomers present in the MDPE of component PE3 is of from 1.0 to 4.0 mol%, more preferably from 1.5 to 3.8 mol% and most preferably from 1.8 to 3.5 mol%.

Preferably, the PE3 component has a molecular weight distribution MWD ($M_w/M_n$) of from 5 to 40, more preferably from 10 to 35, determined according to ISO 16014.

Preferably, the PE3 component has a density of from 926 to 945 $kg/m^3$, more preferably 930 to 940 $kg/m^3$, and most preferably from 932 to 938 $kg/m^3$.

The PE3 component preferably has an $MFR_2$ in the range of from 0.05 to 0.4 g/10min, and particularly preferred from 0.1 to 0.2 g/10min.

Preferably, the PE3 component has an $MFR_5$ of from 0.40 to 0.80 g/10min.

Preferably, the PE3 component has an $MFR_{21}$ of from 10 to 20 g/10min.

Preferably, the PE3 component has a melt flow rate ratio $FRR_{21/2}$ ($MFR_{21}/MFR_2$) of from 40 to 170, preferably from 60 to 150.

Preferably, the PE3 component has a melt flow rate ratio $FRR_{21/5}$ ($MFR_{21}/MFR_5$) of from 20 to 30.

In a particularly preferred embodiment, the MDPE component comprises an ethylene copolymer, and has an $MFR_2$ of from 0.05 to 0.5 g/10min, and/or an $MFR_5$ of from 0.40 to 0.80 g/10min and/or an $MFR_{21}$ of from 10 to 20 g/10min, and/or a density of from 925 to 945 $kg/m^3$, and/or a molecular weight distribution (MWD) of from 5 to 40, and/or an $MFR_{21}/MFR_2$ ratio ($FRR_{21/2}$) of from 40 to 170 and/or an $MFR_{21}/MFR_5$ ratio ($FRR_{21/5}$) of from 20 to 30.

All melt flow rates are determined according to ISO 1133, as described herein below.

As the multimodal MDPE component, resin Borstar FB1350 as produced by Borouge and/or Borealis may be used.

In one embodiment, the PE3 component is present in at least one of the multiple layers of the polyethylene film, preferably, the PE3 component is present in at least 2, layers of the polyethylene film. The PE3 component may be present in all layers of the film, thus, depending on the film structure, in 5, 6, 7, 8 or 9 layers of the polyethylene film. The contents of the PE3 component in the respective layers may be the same or different.

The PE3 component may be present in any or all of the inner surface layer (I), outer surface layer (O), core layer (C), sub-inner surface layer (I1) and/or sub-outer surface layer (O1).

Preferably, the PE3 component is at least present in core layer (C).

The PE3 component may have influence on the mechanical properties of the polyethylene film, and its presence - in a particular content - may further improve the film bubble stability and superior processability.

Preferably, the content of the PE3 and/or PE4 component in the inventive polyethylene film is in the range of from 15 to 60 wt.%, more preferably from 20 to 55 wt.% and most preferably from 25 to 50 wt.%, based on the total weight of the polyethylene film.

In one embodiment, at least one of the multiple layers is made of a composition comprising from 60 to 95 wt.%, preferably from 70 to 93 wt.% and more preferably from 80 to 90 wt.% of the PE3 component, based on the total weight of the respective layer composition.

Preferably, the core layer (C) is made of a composition comprising from 60 to 95 wt.%, preferably from 70 to 93 wt.% and more preferably from 80 to 90 wt.% of the PE3 component, based on the total weight of the composition of the core layer (C).

*PE4 component*

The component PE4 is a linear low density ethylene polymer (LLDPE) having a density of 915 to 930 $kg/m^3$ and a melt flow rate ($MFR_2$) of 0.05 to 1.0 g/10 min, determined according to ISO 1133.

Such LLDPEs are well known in the art and are usually produced in polymerization processes using a catalyst. The LLDPE of component PE4 preferably is a multimodal LLDPE, more preferably bimodal LLDPE. Such multimodal LLDPEs and their production are, for example, described in WO 2004/000933 A1, p. 9 to 12 to which it is referred.

The LLDPE of component PE4 preferably has a density of 920 to 928 $kg/m^3$, more preferably of 920 to 925 $kg/m^3$.

Preferably, the LLDPE of component PE4 is an ethylene copolymer. The comonomer can be alpha-olefins having 4 to 12 carbon atoms, e.g. 1-butene, 4-methyl-1-pentene, 1-hexene, 1-octene, 1-decene. More preferably, the LLDPE is a copolymer of ethylene and 1-butene or 1-hexene, most preferably is a copolymer of ethylene and 1-butene.

Preferably, the total amount of comonomers present in the LLDPE of component PE4 is of 2.0 to 6.0 mol%, more preferably of 2.5 to 5.5 mol%, and most preferably 3.0 to 5.2 mol%.

Preferably, the LLDPE of component PE4 has an $MFR_2$ of 0.1 to 0.5 g/10 min, more preferably of 0.15 to 0.4 g/10min, and most preferably 0.20 to 0.30 g/10 min.

In a particularly preferred embodiment, the LLDPE of component PE4 has an $MFR_2$ of 0.20 to 0.30 g/10 min, and/or an $MFR_5$ of 0.80 to 1.2 g/10 min, and/or an $MFR_{21}$ of 18 to 26 g/10 min, and/or a density of 920 to 925 $kg/m^3$, and/or a molecular weight distribution (MWD) of 10 to 24, and/or an $M_n$ of 10 to 15 kg/mol, and/or an $M_w$ of 150 to 250 kg/mol, and/or an $MFR_{21}/MFR_2$ ratio ($FRR_{21/2}$) of 80 to 110, and/or an $MFR_{21}/MFR_5$ ratio ($FRR_{21/5}$) of 18 to 26. All molecular weight parameters are determined by the GPC conventional method in standard calibration as further described in detail below.

As the LLDPE of component PE4, resin Borstar FB2230 as produced by Borealis or Borouge may be used.

The PE4 component may have influence on the mechanical properties of the polyethylene film, and its presence - in a particular content - may further improve the film bubble stability and superior processability.

Preferably, the content of the PE3 and/or PE4 component in the inventive polyethylene film is in the range of from 15 to 60 wt.%, more preferably from 20 to 55 wt.% and most preferably from 25 to 50 wt.%, based on the total weight of the polyethylene film.

In one embodiment, at least one of the multiple layers is made of a composition comprising from 60 to 100 wt.%, preferably from 65 to 95 wt.% and more preferably from 70 to 95wt.% of the PE3 component and/or PE4 component, based on the total weight of the respective layer composition.

### PE5 component

In one embodiment, at least one of the multiple layers is made of a composition comprising from 1 to 30 wt.%, preferably from 5 to 20 wt.%, of a low density polyethylene (LDPE) component (PE5), based on the total weight of the respective layer composition.

Low density polyethylenes (LDPE) are well known in the art and are produced in high pressure processes usually performed in a tubular reactor or an autoclave. Such LDPE and their production are, for example, described in WO 2017/055174, page 9, line 29, to page 12, line 6, to which it is referred.

Preferably, the PE5 component has a molecular weight distribution MWD ($M_w/M_n$) of from 3 to 12, preferably from 5 to 9, determined according the GPC viscosity method described herein.

Preferably, the PE5 component has a density of from 915 to 930 kg/m$^3$, more preferably of from 921 to 925 kg/m$^3$.

The PE5 component preferably has an MFR$_2$ in the range of from 1.2 to 2.9 g/10min, and particularly preferred from 1.6 to 2.4 g/10min.

All molecular weight parameters of LDPE are measured by the GPC viscosity method as further described in detail below.

As the LDPE component, resin FT6230 as produced by Borouge and/or Borealis may be used.

In one embodiment, the PE5 component is present in at least one of the multiple layers of the polyethylene film. The PE5 component may be present in all layers of the film, thus, depending on the film structure, in 5, 6, 7, 8 or 9 layers of the polyethylene film. The contents of the PE5 component in the respective layers may be the same or different.

The PE5 component may be present in any or all of the inner surface layer (I), outer surface layer (O), core layer (C), sub-inner surface layer (I1) and/or sub-outer surface layer (O1).

Preferably, the PE5 component is at least present in core layer (C).

In one embodiment, at least one of the multiple layers is made of a composition comprising from 1 to 40 wt.%, preferably from 5 to 30 wt.% and more preferably 5 to 20 wt.% of the PE5 component, based on the total weight of the respective layer composition.

In one embodiment, the core layer (C) is made of a composition comprising from 1 to 40 wt.%, preferably from 5 to 30 wt.% and more preferably from 5 to 20 wt.% of the PE5 component, based on the total weight of the composition of the core layer (C).

Any of the multiple layers of the polyolefin film may be made of a composition comprising one or more polyethylene components. According to the invention at least one of the inner surface layer (I) and the outer surface layer (O) is made of a composition comprising a multimodal linear low density ethylene (LLDPE) terpolymer component (PE1) and at least two of the multiple layers are made of a composition comprising a multimodal HDPE component (PE2), based on the total weight of the respective layer composition.

### Inner surface layer (I)

The inner surface layer (I) may be made of any polyethylene composition. The expression "polyethylene composition" denotes a composition that comprises or consists of at least one type of ethylene polymer.

The polyethylene composition may comprise ethylene homopolymers and ethylene copolymers, containing one or more types of comonomers.

Preferably, the polyethylene composition comprises at least 85 wt.% of at least one type of ethylene polymer (including ethylene homopolymers and/or ethylene copolymers), based on the total weight of the polyethylene composition. More preferably, the polyethylene film comprises from 90 to 100 wt.%, still more preferably from 95 to 100 wt.% and most preferably from 98 to 100 wt.% of at least one type of ethylene polymer, based on the total weight of the polyethylene film.

In a preferred embodiment, the polyethylene composition consists of ethylene homopolymers and/or ethylene comonomers.

The inner surface layer (I) may be made of a composition comprising one or more of the PE1, PE2, PE3, PE4 and PE5 components described above.

Preferably, the inner surface layer (I) is made of a composition comprising from 15 to 100 wt.% of the PE2 component and from 0 to 85 wt.% of the PE1 component, based on the total weight of the composition of the inner surface layer (I); wherein the contents of the PE1 components may be the same or different in inner surface layer (I) and outer surface layer (O).

According to one embodiment, the inner surface layer (I) is made of a composition comprising from 50 to 90 wt.%, preferably from 45 to 85 wt.%, more preferably from 48 to 85 wt.% of the PE1 component and from 10 to 50 wt.%, preferably from 12 to 45 wt.%, more preferably from 15 to 40 wt.% of the PE2 component, based on the total weight of the inner surface layer (I) composition.

According to another embodiment, the inner surface layer (I) is made of a composition comprising from 75 to 100 wt.% of the PE2 component, preferably from 85 to 100 wt.%, more preferably from 95 to 100 wt.% and still more preferably 100 wt.%.

Preferably, the inner layer I of the film according the invention has a gloss value of at least 100, when gloss is determined at 60° according to ISO 2813, more preferably of from 100 to 150, most preferably of from 105 to 145.

*Outer surface layer (O)*

The outer surface layer (O) may be made of any polyethylene composition, as defined above with respect to the inner surface layer (I).

The outer surface layer (O) may be made of a composition of the embodiments as described above with respect to the PE1, PE2, PE3, PE4 and PE5 components.

In one embodiment, the outer surface layer (O) is made of a composition comprising from 30 to 100 wt.%, preferably from 40 to 100 wt.%, more preferably from 50 to 100 wt.% of the PE1 component, based on the total weight of the outer surface layer (O) composition.

Preferably, the outer surface layer (O) is made of a composition comprising from 55 to 100 wt.% of the PE1 component and from 0 to 45 wt.% of a further polyethylene component (PE4); based on the total weight of the composition of the outer surface layer (O).

*Core layer (C)*

The core layer (C) may be made of any polyethylene composition, as defined above with respect to the inner surface layer (I) or the outer surface layer (O).

The core layer (C) may be made of a composition of the embodiments as described above with respect to the PE1, PE2, PE3, PE4 and PE5 components.

In one embodiment, the core layer (C) is made of a composition comprising from 60 to 100 wt.%, preferably from 65 to 95 wt.%, of the PE3 component.

In one embodiment, the core layer (C) is made of a composition comprising from 60 to 100 wt.%, preferably from 70 to 100 wt.%, of the PE4 component, based on the total weight of the composition of the core layer (C).

The composition making up the core layer (C) may further comprise from 0 to 40 wt.%, preferably from 5 to 25 wt.%, more preferably from 8 to 15 wt.% of the PE5 component.

*Sub-inner surface layer (11) and sub-outer surface layer (O1)*

The polyethylene film may optionally comprise one or more sub-inner surface layers (I1) and one or more sub-outer surface layers (O1).

The sub-inner surface layer (11) and sub-outer surface layer (O1) may be made of any polyethylene composition, as defined above with respect to the inner surface layer (I).

For example, the sub-inner surface layer (11) and/or the sub-outer surface layer (O1) may be made of composition of any conventional LLDPE, HDPE or LDPE.

The sub-inner surface layer (11) and sub-outer surface layer (O1) may be made of a composition of the embodiments as described above with respect to the PE1, PE2, PE3, PE4 and PE5 components and the different layers.

Preferably, the sub-inner surface layer (I1) and/ or the sub-outer surface layer (O1) is made of a composition comprising, preferably consisting of the PE2 component.

In one embodiment, the sub-outer surface layer (O1) is made of the same composition as the sub-inner surface layer (I1).

In one embodiment, the sub-outer surface layer (O1) and/ or the sub-inner surface layer (11) is made of the same composition as the inner surface layer (I).

*Polyethylene film properties*

The polyethylene film has excellent optical properties.

The polyethylene film preferably has a haze of less than 10%, more preferably less than 9% and most preferably less than 8%, determined according to ASTM D1003. Usually, the haze is higher than 0%, preferably higher than 1%.

The polyethylene film has a gloss at 60°, preferably at the inner surface layer (I), of at least 100, preferably of at least 105 determined according to ISO 2813. The gloss is given in the gloss units. Usually, the gloss at 60° is not more than 150, preferably not more than 145 and most preferably not more than 140.

The polyethylene film has excellent heat seal properties. For example, the polyethylene film has a high heat seal initiation temperature (SIT) at a force of 5N. The higher the heat seal initiation temperature, the higher the capability of the film to withstand high temperatures during subsequent use, such as on the Form, Fill & Seal (FFS) packaging.

The polyethylene film preferably has a seal initiation temperature (SIT) at 5N, preferably measured on at least one of the inner surface layer (I) or the outer surface layer (O), more preferably at the inner surface layer (I), of greater than or equal to 122°C, preferably greater than or equal to 123°C and most preferably greater than or equal to 124°C, determined according to ASTM F2029 and ASTM F88. Usually, the seal initiation temperature at 5N is not greater than 150°C, more preferably not greater than 145°C and most preferably not greater than 140°C. Higher temperatures are generally not obtained for any polyethylene material.

The polyethylene film has excellent barrier properties.

The polyethylene film preferably has a water vapor transmission rate (WVTR) of less than 8 $g/m^2/d$, more preferably less than 7 $g/m^2/d$, still more preferably less than 6 $g/m^2/d$, determined according to ASTM F1249. Usually, the water vapor transmission rate is more than 0.5, preferably more than 1.0 and most preferably more than 1.5 $g/m^2/d$.

The polyethylene film preferably has an oxygen transmission rate (OTR) of less than 2400 $cm^3/m^2/d$, more preferably less than 2200 $cm^3/m^2/d$, even more preferably less than 2000 $cm^3/m^2/d$, determined according to ASTM D3985. Usually, the oxygen transmission rate is more than 200 $cm^3/m^2/d$, preferably more than 300 $cm^3/m^2/d$ and more preferably more than 400 $cm^3/m^2/d$.

The polyethylene film has further excellent mechanical properties.

The polyethylene film preferably has a tensile modulus (1% secant) in transverse direction (TD) of at least 1000 MPa, more preferably at least 1100, and most preferably at least 1200 MPa, determined according to ASTM D882. Usually, the tensile modulus (1% secant) in transverse direction (TD) is not more than 3200, preferably not more than 3000 and most preferably not more than 2800 MPa.

The polyethylene film preferably has a tensile modulus (1% secant) in machine direction (MD) of at least 1500 MPa, more preferably at least 1600, and most preferably at least 1700 MPa, determined according to ASTM D882. Usually, the tensile modulus (1% secant) in machine direction (MD) is not more than 3200, preferably not more than 3000 and most preferably not more than 2800 MPa.

The polyethylene film preferably has a tensile strength (also tensile stress at break) in machine direction (MD) of at least 160 MPa, more preferably at least 165 MPa, determined according to ISO 527-3. Usually, the tensile strength in machine direction (MD) is less than 300, preferably less than 290 and more preferably less than 280 MPa.

*Preparation of the polyethylene film*

The primary (multilayer) film may be produced by any conventional method for producing films, such as blown films or a cast films. Any of the polyethylene compositions described above may be extruded preferably at a temperature of from 170 to 230°C, more preferably from 180 to 220°C. Conventional multilayer film extrusion techniques used in this regard are known in the art. Preferably, all film layers are coextruded at a temperature in the range of from 180 to 215°C in the extruder zones and passed through the annular die at the temperatures of from 195 to 220°C and then cooled by blowing air at a temperature of from 14 to 16°C, to provide a frost line height of from 0.5 to 3 times the diameter of the die. The blow up ratio can be in the range of from 1:1.5 to 1:3.5, preferably from 1:1.8 to 1:3.3, more preferably from 1:2.0 to 1:3.2.

One production method is described in detail in the Example section herein. Blown film extrusion and stretching techniques used for the examples are done on Reifenhauser MDO line well known in the art, as described in EP-2849929.

Preferably primary film with a thickness range of from 80 to 200 μm, more preferably from 90 to 190 μm and most preferably from 100 to 180 μm are thus prepared.

It is preferred, that the primary film is a blown film that is stretched majorly in one direction, referred to as uniaxially oriented film or monoaxially oriented film. Most preferably, the primary film is stretched in the machine direction (MD). Stretching may be carried out by any conventional technique using any conventional stretching devices which are well known in the art.

Selection of the thickness of the primary multilayer film before orientation may depend on the draw or stretch ratio and the desired final thickness of the oriented polyethylene films. The primary multilayer film may be stretched at least 4 times, such as from 4 to 12 times to its original length in the machine direction. Most preferred films of the invention are stretched in a draw ratio of at least 1:4 up to 1:12, preferably 1:4.2 to 1:10 and more preferably 1:4.5 to 1:8. The obtained thickness of the oriented film is preferably in the range of up to 35 $\mu$m, such as in the range of from 12 to 35 $\mu$m, more preferably from 14 to 32 $\mu$m, and most preferably from 15 to 30 $\mu$m. Thus a draw ratio of at least 1:4 preferably also means that the thickness of the film is at least four times less than the original thickness of primary film.

*Laminates, Articles and Use*

The present invention further relates to laminates and articles comprising the polyethylene film according to any one of the embodiments as described herein. Preferably, the article is a packaging material, more preferably a flexible packaging material.

Lamination is preferably done by laminating the polyolefin film to a second polymeric film, preferably a sealant film. Preferably, the second polymeric film is laminated to the outer surface layer (O) of the inventive polyethylene film.

In one embodiment, the laminate comprises a sealant film, wherein the sealant film is made of a polyolefin composition, preferably a polyethylene composition as defined above. If the polyethylene film of the invention is laminated to a polyethylene sealant film, it provides 100% recyclable (monomaterial) packaging structure.

Preferably, the article is a pouch, preferably a stand-up pouch, a bag, a print film or a laminate.

The present invention further relates to a food package comprising the polyethylene film or the laminate according to any one of the embodiments as described herein.

Finally, the present invention relates to the use of the polyolefin film or the laminate according to any one of the embodiments described herein for packaging of articles.

The films and laminates according to the present invention may be employed in a wide variety of end applications however they are of particular interest in the manufacture of packaging, especially food, drink or packaging of goods in medium duty or heavy duty shipping sacks.

A number of packaging examples can be produced with the films and laminates according to the present invention in different applications, such as packing of detergent or washing powders, pet foods, or regular consumer goods packaging like wheat, rice, food grains, wheat flour, salt and sugar packaging.

In particular the films may be utilized in form, fill and seal packaging technology or in the formation of stand up pouches. For example, a uniaxially oriented film having high stiffness and clarity, can be laminated to a stiff, polyethylene-rich blown film, and the laminate can be used to form a stand-up pouch formed entirely from polyethylene.

The films according to the present invention having excellent optical properties and stiffness, combined with good heat resistance and barrier properties may be used in several applications as they are advantageous over conventional MDO films and run smoothly on the vertical Form, Fill & Seal (FFS) packaging line, where superior stiffness of the inventive films plays an important role to run at a faster packaging speed.

In the following, the invention will further be illustrated by way of examples, which refer to the following figures:

Figure 1 illustrates the layer structure of the polyethylene films.

Figure 2 shows the results obtained for the tensile strength and tensile modulus (1% secant), both in machine direction (MD) and transverse direction (TD), of the polyethylene films.

Figure 3 shows the measured gloss and haze of the polyethylene films.

Figure 4 shows data regarding barrier performance (WVTR and OTR).

Figure 5 is a plot of the heat seal initiation temperature (SIT) of the polyethylene films.

*Measurement and Determination Methods*

The following definitions of terms and measurement and determination methods apply to the above general description of the invention as well as to the below examples, unless otherwise indicated. Measurements on the uniaxially oriented film in the examples were performed at a film thickness of 20.5 $\mu$m, unless otherwise indicated.

a) Measurement of melt flow rate MFR

The melt flow rate (MFR) was determined according to ISO 1133 and was indicated in g/10min. The higher the melt flow rate, the lower the viscosity of the polymer. The MFR is determined at 190°C for polyethylene and at a loading of 2.16 kg (MFR$_2$), 5.00 kg (MFR$_5$) or 21.6 kg (MFR$_{21}$).

The quantity FRR ((melt) flow rate ratio) is an indication of molecular weight distribution and denotes the ratio of flow rates at different loadings. Thus, $FRR_{21/5}$ denotes the value of $MFR_{21}/MFR_5$ and $FRR_{21/2}$ denotes the value of $MFR_{21}/MFR_2$.

b) Density

Density of the polymer was measured according to ISO 1183-1:2004 (method A) on compression moulded specimen prepared according to EN ISO 1872-2 (Feb 2007) and is given in $kg/m^3$.

c) GPC

*(1) GPC conventional method*

Molecular weight averages ($M_z$, $M_w$ and $M_n$), molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i \, x \, M_i)}{\sum_{i=1}^{N} A_i} \quad (2)$$

$$M_z = \frac{\sum_{i=1}^{N} (A_i \, x \, M_i^2)}{\sum_{i=1}^{N} (A_i x M_i)} \quad (3)$$

For a constant elution volume interval $\Delta V_i$, where $A_i$, and $M_i$ are the chromatographic peak slice area and polyolefin molecular weight (MW), respectively associated with the elution volume, Vi, where N is equal to the number of data points obtained from the chromatogram between the integration limits.

A high temperature GPC instrument, equipped with either infrared (IR) detector (IR4 or IR5 from PolymerChar (Valencia, Spain)) or differential refractometer ((RI) from Agilent Technologies, equipped with 3 x Agilent-PLgel Olexis and 1x Agilent-PLgel Olexis Guard columns) was used. As mobile phase 1,2,4-trichlorobenzene (TCB) stabilized with 250 mg/L 2,6-Di tert-butyl-4-methyl-phenol) was used. The chromatographic system was operated at column temperature of 160°C and detector at 160°C and at a constant flow rate of 1 mL/min. 200 μL of sample solution was injected per analysis. Data collection was performed using either Agilent Cirrus software version 3.3 or PolymerChar GPC-IR control software.

The column set was calibrated using 19 narrow MWD polystyrene (PS) standards in the range of from 0.5 kg/mol to 11 500 kg/mol. The PS standards were dissolved at room temperature over several hours. The conversion of the polystyrene peak molecular weight to polyolefin molecular weights is accomplished by using the Mark-Houwink equation and the following Mark-Houwink constants:

$$K_{PS} = 19 \times 10^{-3} \text{ mL/g}, \quad \alpha_{PS} = 0.655$$

$$K_{PE} = 39 \times 10^{-3} \text{ mL/g}, \quad \alpha_{PE} = 0.725$$

A third order polynomial fit was used to fit the calibration data.

All samples were prepared in the concentration range of around 1 mg/ml and dissolved at 160°C for 3 (three) hours for PE in fresh distilled TCB stabilized with 250 ppm Irgafos168 under continuous gentle shaking.

*(2) GPC viscosity method*

Molecular weight averages ($M_z$, $M_w$ and $M_n$), molecular weight distribution (MWD) of LDPE is measured by GPC-viscosity method using universal calibration. Molecular weight averages ($M_w$, $M_n$), Molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO 16014-4 2019. A PL 220 (Polymer Laboratories) GPC equipped with an IR4 infrared detector, an online four capillary bridge viscometer (PL-BV 400-HT) was used. 3x Olexis and 1x Olexis Guard columns from Polymer Laboratories as stationary phase and 1,2,4-trichlorobenzene (TCB, stabilized with 250 mg/L 2,6-Di tert butyl-4-methyl-phenol) as mobile phase at 160°C and at a constant flow rate of 1 mL/min was applied. 200 μL of sample solution were injected per analysis. The corresponding detector constant of the viscometer as well as the inter-detector delay volumes were determined with a narrow PS standard (MWD = 1.01) with a molar mass of 132900 g/mol and an intrinsic viscosity of 0.4789 dl/g. The detector constant of the IR4 detector was determined using NIST1475a with dn/dc of 0.094 cm³/g.

The column set was calibrated using universal calibration (according to ISO 16014-2:2019) with at least 15 narrow MWD polystyrene (PS) standards in the range of from 0.5 kg/mol to 11600 kg/mol. The corresponded intrinsic viscosities of the PS standards were calculated from their corresponding concentration (IR4), online viscometer signals, and determined detector constants for polystyrene. For low molecular weight PS with a molar mass below 3000 g/mol the initial weight out concentration is used, due to end group effects in the IR detector.

The molecular weight of the sample ($M_2$) at each chromatographic slice using the universal calibration approach can be calculated by following correlation:

$$\log M_1[\eta_1] = V_R = \log M_2[\eta_2]$$

with:

$M_1$ Molar mass of PS

$\eta_1$ intrinsic viscosity of the PS

$M_2$ Molar mass of sample

$\eta_2$ intrinsic viscosity of sample

$V_R$ Retention volume

All data processing and calculation was performed using the Cirrus Multi-Offline SEC-Software Version 3.2 (Polymer Laboratories a Varian inc. Company).

All samples were prepared by dissolving 5.0 - 9.0 mg of polymer in 8 mL (at 160°C) of stabilized TCB (same as mobile phase) for 2.5 hours for PP or 3 hours for PE at max. 160°C under continuous gentle shaking.

d) Comonomer content

The comonomer content was measured as indicated in WO2019081611, pages 31 to 34.

e) Mechanical Properties

*(1) Tensile Modulus*

Film tensile properties were measured at 23°C according to ISO 527-3 with a specimen Type 2 using MDO film of 20 to 25 μm thickness.

Tensile modulus in machine direction (MD) and in transverse direction (TD) were measured as 1% secant modulus with 5 mm/min test speed and 50 mm gauge length according to ASTM D882.

*(2) Tensile Stress at Break*

Tensile stress at break (also known as tensile strength) in machine direction (MD) and in transverse direction (TD) were measured according to ISO 527-3 specimen Type 2 with 50 mm gauge length and 500 mm/min test speed.

*(3) Tensile Stress at Yield*

Tensile stress at yield in machine direction (MD) and in transverse direction (TD) were measured according to ISO 527-3.

*(4) Elongation at Yield*

Elongation at yield in machine direction (MD) and in transverse direction (TD) were measured according to ISO 527-3.

*(5) Elongation at Break*

Elongation at break in machine direction (MD) and in transverse direction (TD) were measured according to ISO 527-3.

*(6) Elmendorf Tear Strength*

Elmendorf tear strength in machine direction (MD) and in transverse direction (TD) were measured according to ASTM D1922.

*(7) Dart Drop Impact*

Dart drop impact was measured according to ASTM D1709 Method A.

f) Friction Parameters

Static coefficient of friction (in/in or I/I), dynamic coefficient of friction (in/in or I/I), static coefficient of friction (out/out or O/O) and dynamic coefficient of friction (out/out or O/O) were measured according to ISO 8295.

g) Optical Properties

*(1) Gloss*

Gloss was determined according to ISO 2813.

Gloss of the inner surface layer (I) (i.e. on the film surface of the inner side of the film) was determined according to ISO 2813 at an angle of 60°. As per ISO 2813, three measurement angles (20°, 60° and 85°) can be used by BYK-Gardner Micro-TRI-Gloss Meter and gloss values at 60° were recorded and reported as gloss units (GU).

*(2) Haze*

Haze was determined according to ASTM D1003.

**h)** Barrier Properties

*(1) Water Vapor Transmission Rate (WVTR)*

Water vapor transmission rates were determined under tropical conditions (37.8°C, 90% RH) according to ASTM F-1249:2006. Alternatively, the water vapor transmission rates may be determined according to ISO15106-2:2003 at the same conditions.

*(2) Oxygen Transmission Rate (OTR)*

Oxygen transmission rates were measured by ASTM D3985 using a pressure sensor method at standard conditions (23°C, 99.9% $O_2$, 0% RH). OTR were measured in a chamber, where first both sides of the film were evacuated and then oxygen was slowly let to the other side and the gas sensor measures the content from the vacuum side.

**i)** Heat Seal Parameters

The seal initiation temperature at 5N force and the maximum seal force were determined according to ASTM F2029 and ASTM F88. Generally, heat seal is formed by bonding two (polymeric) films in the way that surfaces are pressed together into a close contact while being at least partially molten. These test standards also cover the evaluation part after the heat seal process is performed. The force required to separate a test strip of material containing the seal is measured using UTM. Following the ASTM F2029 and ASTM F88 standards, a tested specimen with a film thickness of 20 to 25 $\mu$m (produced as described below in the Examples section) was tested, where the sealed surfaces of the film (inner surface layer (I)) where selected. For testing, a minimum of five specimens shall be used for each seal temperature. The term "seal initiation temperature" (SIT) is specified as the "heat seal initiation temperature at 5N" and it refers to the temperature at which a seal is formed that will have a strength of 5N after cooling. This temperature is a temperature at which a heat seal forms immediately after the sealing operation (sealing time 1.0 seconds, sealing pressure 3 bar), the strength of the heat seal being measured at a specified time interval (at least 24 h after completion of the sealing cycle and after the seal has cooled to ambient temperature and reached maximum strength).

**Examples**

The polymers used for making the film structures of the invention and of the comparative example are given in table 1 below.

*Table 1*

| Resin grade | Producer | Type | MFR$_2$(g/10min)* | Density (kg/m$^3$) |
|---|---|---|---|---|
| Anteo FK2715 | Borouge | Bimodal 1-butene,1-hexene ethylene terpolymer | 1.3 | 927 |
| Borstar FB5600 | Borouge | Bimodal ethylene copolymer | 0.7 | 960 |
| Borstar FB1350 | Borouge | Bimodal MDPE | 0.15, (MFRs: 0.6) | 935 |
| Borstar FB2230 | Borouge | Bimodal LLDPE | 0.25, (MFRs: 0.9) | 923 |
| LDPE FT6230 | Borouge | tubular LDPE | 2 | 923 |

*MFR$_2$ (190 °C/2.16 kg load) and MFR$_5$ (190 °C/5 kg load).

Polybatch® AMF705HF is a polymer processing aid, commercially available from A. Schulman.

*1. Preparation of five-layer polyethylene films (primary films)*

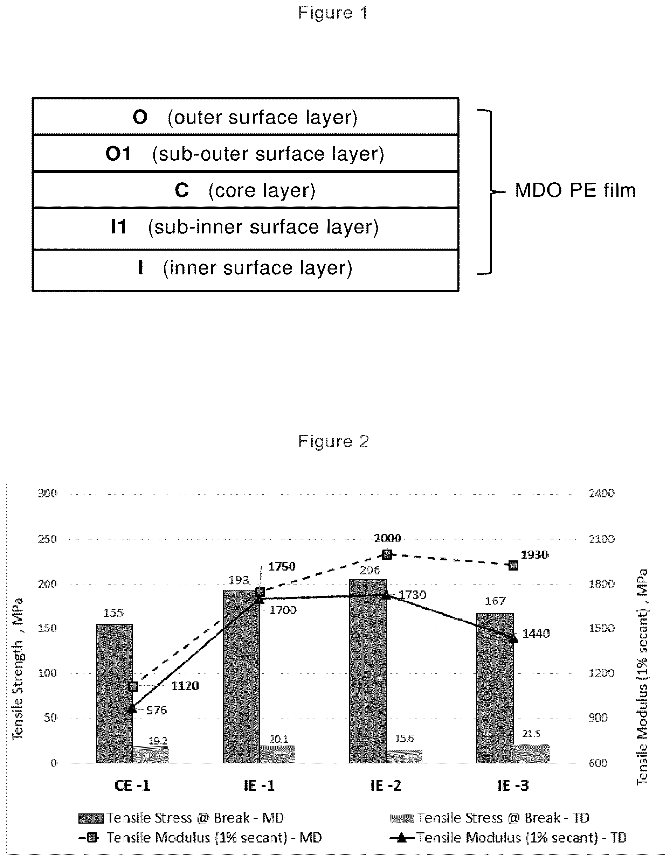

One comparative film (Comparative Example CE-1) and the films in accordance with the invention (Inventive Examples IE-1, IE-2, IE-3) were produced as five-layer blown films as depicted in Figure 1.
Table 2 provides the structures of the comparative film CE1 and the inventive films IE1 to IE3, comprising a 5-layer structure having an inner surface layer (I), a sub-inner surface layer (11), a core layer (C), a sub-outer surface layer (O1) and an outer surface layer (O). All percentages in Table 2 are wt.% based on the total weight of the respective layer.

*Table 2*

| | CE1 | IE1 | IE2 | IE3 |
|---|---|---|---|---|
| Extruder number | Primary film = 138 $\mu$m<br><br>Final MDO film = 28 $\mu$m | Primary film = 120 $\mu$m<br><br>Final MDO film = 24 $\mu$m | Primary film = 120 $\mu$m<br><br>Final MDO film = 24 $\mu$m | Primary film = 131 $\mu$m<br><br>Final MDO film = 25 $\mu$m |

(continued)

|  | CE1 | IE1 | IE2 | IE3 |
|---|---|---|---|---|
| **Extruder No. 1** (extruder-A) Outer surface layer (O) of film | 90% FB1350 + 10% FT6230 | **59% FK2715** (PE1) + 30% FB2230 (PE4) + 10% FT6230 + 1% AMF705HF | **59% FK2715** (PE1) + 30% FB2230 (PE4) + 10% FT6230 + 1% AMF705HF | **100% FK2715** (PE1) |
| **Extruder No.2** (extruder-B) | 90% FB1350 + 10% FT6230 | 100% FB5600 (PE2) | 100% FB5600 (PE2) | 100% FB5600 (PE2) |
| **Extruder No. 3** (extruder-C) | 90% FB1350 (PE3) + 10% FT6230 | 90% FB1350 (PE3) + 10% FT6230 | 90% FB1350 (PE3) + 10% FT6230 | 100% FB2230 (PE4) |
| **Extruder No. 4** (extruder-D) | 90% FB1350 + 10% FT6230 | 100% FB5600 (PE2) | 100% FB5600 (PE2) | 100% FB5600 (PE2) |
| **Extruder No. 5** (extruder-E) Inner surface layer (I) of film | 90% FB1350 + 10% FT6230 | **79% FK2715** (PE1) + **15% FB5600** (PE2) + 5% FT6230 + 1% AMF705HF | **49% FK2715** (PE1) + **40% FB5600** (PE2) + 10% FT6230 + 1% AMF705HF | **100% FB5600** (PE2) |

Primary blown films of 120 to 138 μm thickness were produced on a Reifenhauser ultra-stretch film line (with internal bubble cooling system - IBC) having an output of 480 to 520 kgs/hr. The details as listed in Table 3 below.

*Table 3*

| Blown film line parameters | |
|---|---|
| Die diameters | 500 mm |
| Die gap | 2.0 mm |
| Blow up ratio (BUR) | 2.2 : 1 |

Table 4 lists the melt temperatures used for different layers of the blown film extruders and respective melt pressure. Each extruder used a slightly different process condition in order to optimize the processability and stable production of each primary films.

*Table 4*

|  |  | Extruder No.1 | Extruder No.2 | Extruder No.3 | Extruder No.4 | Extruder No.5 |
|---|---|---|---|---|---|---|
| CE1 | Layer thickness distribution | 19% | 19% | 24% | 19% | 19% |
|  | Melt temperature (°C) | 205 | 205 | 207 | 205 | 204 |
|  | Melt pressure (bar) | 473 | 518 | 510 | 457 | 440 |
| IE1 | Layer thickness distribution | 12% | 24% | 28% | 24% | 12% |
|  | Melt temperature (°C) | 190 | 198 | 207 | 199 | 188 |
|  | Melt pressure (bar) | 251 | 383 | 502 | 332 | 229 |
| IE2 | Layer thickness distribution | 12% | 24% | 28% | 24% | 12% |
|  | Melt temperature (°C) | 190 | 198 | 207 | 199 | 202 |
|  | Melt pressure (bar) | 252 | 383 | 500 | 330 | 215 |
| IE3 | Layer thickness distribution | 18% | 18% | 28% | 18% | 18% |
|  | Melt temperature (°C) | 182 | 198 | 208 | 199 | 198 |
|  | Melt pressure (bar) | 277 | 327 | 441 | 279 | 290 |

The temperature profiles of the blown film line (in °C), i.e. the temperatures used for different locations of the blown film lines, were as given in Tables 5 to 8.

*Table 5*

| Layers Comparative Example (CE1) | Extruder zone 1 | Extruder zone 2 | Extruder zone 3 | Extruder zone 4 | Post Extruder zone 7 | Post Extruder zone 8 | | |
|---|---|---|---|---|---|---|---|---|
| Outer surface layer (O) | 200 | 200 | 200 | 200 | 205 | 205 | | |
| Sub-outer surface layer (O1) | 200 | 200 | 200 | 200 | 205 | 205 | | |
| Core layer (C) | 200 | 200 | 200 | 200 | 205 | 205 | | |
| Sub-inner surface layer (11) | 200 | 200 | 200 | 200 | 205 | 205 | | |
| Inner surface layer (I) | 200 | 200 | 200 | 200 | 205 | 205 | | |
| Die (zones) | Zone 1-2 | Zone 3-4 | Zone 5 | Zone 6 | Zone 7 | Zone 8 | Zone 9 | Zone 10 |
| Die | 205 | 205 | 205 | 205 | 205 | 210 | 210 | 210 |

*Table 6*

| Layers Inventive Example 1 (IE1) | Extruder zone 1 | Extruder zone 2 | Extruder zone 3 | Extruder zone 4 | Post Extruder zone 7 | Post Extruder zone 8 | | |
|---|---|---|---|---|---|---|---|---|
| Outer surface layer (O) | 180 | 185 | 185 | 185 | 190 | 190 | | |
| Sub-outer surface layer (O1) | 200 | 200 | 200 | 200 | 200 | 200 | | |
| Core layer (C) | 200 | 205 | 205 | 205 | 205 | 205 | | |
| Sub-inner surface layer (11) | 200 | 200 | 200 | 200 | 200 | 200 | | |
| Inner surface layer (I) | 180 | 185 | 185 | 185 | 190 | 190 | | |
| Die (zones) | Zone 1-2 | Zone 3-4 | Zone 5 | Zone 6 | Zone 7 | Zone 8 | Zone 9 | Zone 10 |
| Die | 200 | 200 | 200 | 200 | 205 | 205 | 210 | 210 |

*Table 7*

| Layers Inventive Example 2 (IE2) | Extruder zone 1 | Extruder zone 2 | Extruder zone 3 | Extruder zone 4 | Post Extruder zone 7 | Post Extruder zone 8 | | |
|---|---|---|---|---|---|---|---|---|
| Outer surface layer (O) | 180 | 185 | 185 | 185 | 190 | 190 | | |

(continued)

| Layers Inventive Example 2 (IE2) | Extruder zone 1 | Extruder zone 2 | Extruder zone 3 | Extruder zone 4 | Post Extruder zone 7 | Post Extruder zone 8 | | |
|---|---|---|---|---|---|---|---|---|
| Sub-outer surface layer (O1) | 200 | 200 | 200 | 200 | 200 | 200 | | |
| Core layer (C) | 200 | 205 | 205 | 205 | 205 | 205 | | |
| Sub-inner surface layer (11) | 200 | 200 | 200 | 200 | 200 | 200 | | |
| Inner surface layer (I) | 190 | 195 | 195 | 195 | 200 | 200 | | |
| Die (zones) | Zone 1-2 | Zone 3-4 | Zone 5 | Zone 6 | Zone 7 | Zone 8 | Zone 9 | Zone 10 |
| Die | 200 | 200 | 200 | 200 | 205 | 205 | 210 | 210 |

*Table 8*

| Layers Inventive | Extruder zone 1 | Extruder zone 2 | Extruder zone 3 | Extruder zone 4 | Post Extruder | Post Extruder | | |
|---|---|---|---|---|---|---|---|---|
| Outer surface layer (O) | 170 | 175 | 175 | 175 | 180 | 180 | | |
| Sub-outer surface layer (O1) | 200 | 200 | 200 | 200 | 200 | 200 | | |
| Core layer (C) | 200 | 205 | 205 | 205 | 205 | 205 | | |
| Sub-inner surface layer (11) | 200 | 200 | 200 | 200 | 200 | 200 | | |
| Inner surface layer (I) | 200 | 200 | 200 | 200 | 200 | 200 | | |
| Die (zones) | Zone 1-2 | Zone 3-4 | Zone 5 | Zone 6 | Zone 7 | Zone 8 | Zone 9 | Zone 10 |
| Die | 200 | 200 | 200 | 200 | 205 | 205 | 210 | 210 |

### 2. Preparation of uniaxially oriented polyethylene films

Uniaxially-oriented, in the present case in the machine direction oriented (MDO) films, were prepared from the above described primary films.

The MDO films were produced by orienting, i.e. stretching, the non-oriented primary films by a certain stretch ratio to achieve the final thickness of the MDO film. This orientation can generally take place both in in-line and off-line stretching lines, however in-line stretching was used for the present examples.

The primary film obtained from blown film extrusion was pulled into the machine direction and then stretched between two sets of nip rollers where the second pair ran at higher speed than the first pair resulting in the desired stretch ratio. The oriented or stretched film was then annealed by holding the film at an elevated temperature for a period of time to allow for stress relaxation. The temperature of the annealing thermal rollers is generally from about 60°C to about 110°C and the annealing time is from about 0.5 to about 2 seconds. Finally, the film was cooled by contacting the film with rollers that were at ambient temperature. The process steps of the film preparation are commonly known and may be carried out in one film line in a manner known in the art. Such film lines are commercially available, for example from Windmoller & Holscher, Reifenhauser, Hosokawa Alpine, etc. Blown film extrusion and stretching techniques used for these examples were done on Reifenhauser MDO line.

In detail, stretching of the examples CE1 and IE1, IE2, IE3 were carried out by online, which consisted of preheating, drawing, annealing and cooling step, with each step being at specific temperature to optimize the performance of the unit and produce films with the desired properties. The heating was done in the range of from 103°C to 120°C, the stretching was done at 107 to 118°C, annealing and cooling was done at 85 to 60°C down to finally 45°C. After exiting the stretching machine, the film was fed into a conventional film winder where the film was slit to its desired width and wound to form reels.

**Results**

Properties of the MDO films and the respective methods used for their determination are summarized in Table 9 below.

*Table 9*

|  | Method | CE1 | IE1 | IE2 | IE3 |
|---|---|---|---|---|---|
| Thickness [μm] |  | 28 | 24 | 24 | 25 |
| Tensile modulus (1% secant modulus), MPa | ASTM D882 |  |  |  |  |
| MD |  | 1120 | 1750 | 2000 | 1930 |
| TD |  | 976 | 1700 | 1730 | 1440 |
| Tensile stress at Yield, MPa | ISO 527-3 |  |  |  |  |
| TD |  | 25.7 | 34.1 | 36.0 | 33.5 |
| Elongation at Yield, % | ISO 527-3 |  |  |  |  |
| TD |  | 4.6 | 3.9 | 3.4 | 3.8 |
| Tensile stress at Break, MPa | ISO 527-3 |  |  |  |  |
| MD |  | 155 | 193 | 206 | 167 |
| TD |  | 19.2 | 20.1 | 15.6 | 21.5 |
| Elongation at Break, % | ISO 527-3 |  |  |  |  |
| MD |  | 22 | 31 | 27 | 20 |
| TD |  | 806 | 405 | 111 | 39 |
| Elmendorf Tear Strength, N | ASTM D1922 |  |  |  |  |
| MD |  | 1.5 | 2.0 | 1.2 | 1.0 |
| TD |  | 3.5 | 4.9 | 3.2 | 1.8 |
| Haze, % | ASTM D1003 | 12.2 | 4.6 | 5.1 | 7.1 |
| Gloss at 60° (inner surface layer (I)) | ISO 2813 | 85 | 125 | 115 | 108 |
| Dynamic Coefficient of Friction (in/in or I/I) | ISO 8295 | 0.41 | 0.49 | 0.43 | 0.44 |
| Heat Seal of layer I | ASTM F2029, ASTM F88 |  |  |  |  |
| Seal Initiation Temperature at 5N force, °C |  | 121.2 | 124.5 | 126.1 | 129.2 |
| Maximum Seal Force, N |  | 26.9 | 28.0 | 21.6 | 21.1 |
| WVTR, g/m$^2$/day | ASTM F1249 | 8.2 | 4.5 | 4.9 | 5.6 |
| OTR, cm$^3$/m$^2$/day | ASTM D3985 | 2420 | 1355 | 1495 | 1685 |

As shown in Table 9, the films according to the invention IE1 to IE3 show superior behavior over the film of the comparative example CE1 in terms of improved optical properties (gloss and haze), mechanical properties (tensile modulus) and higher heat resistance (through heat seal initiation temperature at 5N) as well as improved barrier properties (WVTR and OTR).

*a) Mechanical Properties*

Referring to Figure 2, which illustrates tensile strength and tensile modulus (1% secant) in both machine direction (MD) and transverse direction (TD), extremely high tensile modulus (1% secant) of more than 1500 MPa in machine direction (MD) was reached by the inventive MDO film examples. These results are reached due to the multimodal HDPE component (PE2) and its balance with incorporation of the multimodal LLDPE component (PE1) for further improvement. Inventive films have a tensile strength in machine direction (MD) of at least 160 MPa, determined according to ISO 527-3.

Possibly, incorporation of PE1 component may influence the mechanical properties of the polyethylene film, in particular stiffness and tensile modulus together with superior optical properties.

*b) Optical Properties*

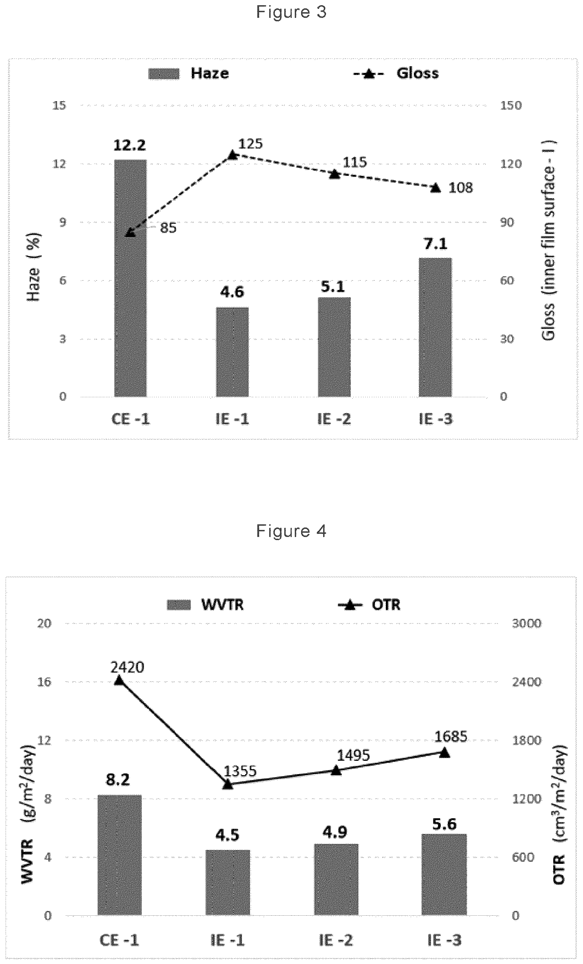

As is depicted in Table 9 and illustrated in Figure 3, haze of the film and gloss (at 60°) at the inner surface layer (I) are improved in the inventive film. Haze of the inventive film is below 10% vs. more than 12% in the comparative film example. Gloss is more than 100 at the inner surface layer (I) of the inventive film, and the overall optical properties of the film according to the invention are very good and are well suited for the majority of packaging applications.

For the use of MDO polyethylene films as substrate, often printing is performed on the outer surface layer (O) of the MDO film after surface treatment (corona treatment of from 42 to 44 dyne/cm). Then it is used as a reverse printed substrate. Therefore, for the inner surface layer (I) of the film, it is important to have a high gloss value, which is connected with aesthetic appearance in all packaging applications.

*c) Seal Initiation Temperature*

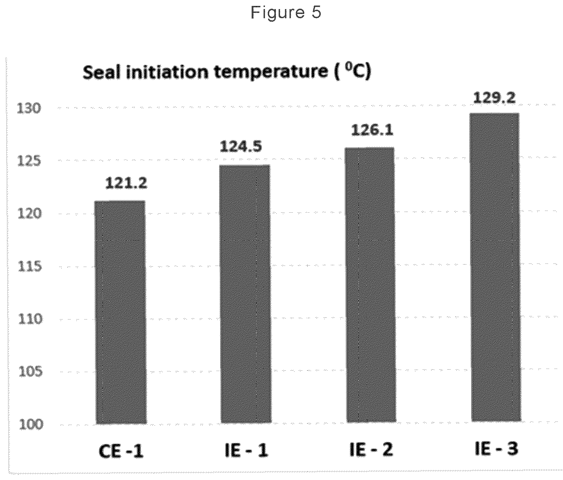

The heat seal initiation temperatures (also heat resistance) have been determined for the inner surface layer (I) of the inventive and comparative example and the data are illustrated in Figure 5 below, showing the superior performance in these inventive examples.

As can easily be seen in the heat seal curves of Figure 5, the films according to the invention (IE1 to IE3) have a significantly higher heat seal initiation temperature at 5N than the film of the comparative example (CE1).

The heat seal initiation temperatures of the inner surface layer (I) is very important for the films which are intended to be used as substrate in any packaging application. The high heat seal initiation temperature at 5N indicates that the film has enhanced capability to withstand higher temperature during subsequent use on the Form, Fill & Seal (FFS) lines to facilitate better packaging speed (which is a major challenge for full-PE laminates).

*d) Barrier properties*

As depicted in Table 9 and/or in Figure 4, improved barrier performance was obtained for the inventive example vs the comparative example. Both, water vapour transmission rate WVTR (37.8°C; 90% RH) and oxygen transmission rate OTR (23°C; 99.9% O2; 0% RH) were reduced in the example according to the invention by more than 30%. These results also satisfy the requirements of packaging products with respect to barrier properties of polyethylene film, specifically when used as laminates. The inventive films have a water vapor transmission rate (WVTR) of less than 8 g/m$^2$/d, more preferably less than 7 g/m$^2$/d, determined according to ASTM F1249; and an oxygen transmission rate (OTR) of less than 2400 cm$^3$/m$^2$/d, more preferably less than 2200 cm$^3$/m$^2$/d and most preferably less than 2000 cm$^3$/m$^2$/d, determined according to ASTM D3985.

**Claims**

1. An uniaxially oriented polyethylene film, comprising multiple layers including an inner surface layer (I), an outer surface layer (O) and a core layer (C),

   wherein at least one of the inner surface layer (I) and the outer surface layer (O) is made of a composition comprising a multimodal linear low density ethylene (LLDPE) terpolymer component (PE1) with a density between 920 to 940 kg/m$^3$, in an amount of from 30 to 100 wt.% of based on the total weight of the respective layer composition;
   wherein at least two of the multiple layers are made of a composition comprising a multimodal HDPE component (PE2) with a density of more than 950 kg/m$^3$ up to 970 kg/m$^3$.

2. The polyethylene film according to any one of the preceding claims, wherein the multimodal linear low density ethylene terpolymer component (PE1) is a linear low density polyethylene (LLDPE), having a density of 922 to 937 $kg/m^3$, preferably of 925 to 935 $kg/m^3$ and a melt flow rate $MFR_2$ of 0.5 to 2.0 g/10 min, preferably 0.7 to 1.8 g/10 min, more preferably 1.0 to 1.6 g/10 min.

3. The polyethylene film according to any one of the preceding claims, wherein the multimodal linear low density ethylene terpolymer component (PE1) is a terpolymer of ethylene with two different comonomers selected from alpha-olefins having from 4 to 10 carbon atoms, preferably a terpolymer of ethylene, 1-butene and 1-hexene.

4. The polyethylene film according to any one of the preceding claims, wherein the multimodal linear low density ethylene terpolymer component (PE1) is a terpolymer of ethylene, 1-butene and 1-hexene having a 1-butene content of from 0.1 to 5.0 wt.-%, preferably from 0.2 to 3.5 wt.-%, more preferably from 0.3 to 2.0 wt.-% and a 1-hexene content of from 2.0 to 14.9 wt.-%, preferably from 2.5 to 12.3 wt.-%, more preferably from 3.0 to 9.7 wt.-%, based on the total weight of the multimodal linear low density ethylene terpolymer component (PE1).

5. The polyethylene film according to any one of the preceding claims, wherein the multimodal HDPE (PE2) is a copolymer of ethylene having an $MFR_2$ of 0.3 to 1.2 g/10min, preferably 0.4 to 1.0 g/10 min, most preferably 0.5 to 0.9 g/10 min, and comprising:

   a lower molecular weight (LMW) component and a higher molecular weight (HMW) component; wherein the LMW component is an ethylene homopolymer, having a density of from 965 to 975 $kg/m^3$ and the HMW component is an ethylene copolymer of ethylene with at least one C4 to C12 alpha-olefin, having a density of from 935 to 955 $kg/m^3$.

6. The polyethylene film according to any one of the preceding claims, having:

   (a) a tensile modulus (1% secant) in machine direction (MD) of at least 1500 MPa, determined according to ASTM D882; and/ or
   (b) a haze of less than 10%, more preferably less than 9%, determined according to ASTM D1003; and/or
   (c) a gloss of at least 100, when gloss is determined at 60° according to ISO 2813, more preferably of from 100 to 150; and/or
   (d) a seal initiation temperature (SIT) of at least one of the inner surface layer (I) or the outer surface layer (O) of greater than 122°C, determined according to ASTM F2029 and ASTM F88; and/or
   (e) a water vapor transmission rate (WVTR) of less than 8 $g/m^2/d$, more preferably less than 7 $g/m^2/d$, determined according to ASTM F1249; and/or
   (f) an oxygen transmission rate (OTR) of less than 2400 $cm^3/m^2/d$, more preferably less than 2200 $cm^3/m^2/d$ and most preferably less than 2000 $cm^3/m^2/d$, determined according to ASTM D3985.

7. The polyethylene film according to any one of the preceding claims, wherein the outer surface layer (O) is made of a composition comprising from 55 to 100 wt.% of the PE1 component and from 0 to 45 wt.% of a further polyethylene component (PE4); based on the total weight of the composition of the outer surface layer (O).

8. The polyethylene film according to any one of the preceding claims, wherein the inner surface layer (I) is made of a composition comprising from 15 to 100 wt.% of the PE2 component and from 0 to 85 wt.% of the PE1 component, based on the total weight of the composition of the inner surface layer (I); wherein the contents of the PE1 components may be the same or different in inner surface layer (I) and outer surface layer (O).

9. The polyethylene film according to any one of the preceding claims, wherein the polyethylene film has an overall thickness of 12 to 40 $\mu$m and comprises up to nine layers.

10. The polyethylene film according to any one of the preceding claims, wherein at least one layer of the multiple layers is made of a composition comprising a medium density ethylene component (PE3) having a density of from 920 to 950 $kg/m^3$ or a linear low density ethylene component (PE4) having a density of from 915 to 930 $kg/m^3$.

11. The polyethylene film according to any one of the preceding claims, wherein the polyethylene film has

   (a) a tensile modulus (1% secant) in machine direction (MD) of at least 1500 MPa, determined according to ASTM D882; and

(b) a haze of less than 10%, determined according to ASTM D1003; and

(c) a gloss of at least 100, when gloss is determined at 60° according to ISO 2813.

12. A laminate or an article comprising the polyethylene film according to any one of the preceding claims, wherein the article is a packaging material.

13. The laminate according to claim 12, wherein the laminate comprises a sealant film and the sealant film is made of a polyethylene composition.

14. Use of the polyethylene film according to any one of claims 1 to 11 or the laminate according to any one of claims 12 or 13 for packaging of articles.

15. A food package comprising the polyethylene film according to any one of claims 1 to 11 or the laminate according to any one of claims 12 to 13.

Figure 1

| |
|---|
| **O** (outer surface layer) |
| **O1** (sub-outer surface layer) |
| **C** (core layer) |
| **I1** (sub-inner surface layer) |
| **I** (inner surface layer) |

— MDO PE film

Figure 2

Figure 3

Figure 4

Figure 5

Europäisches
Patentamt

European
Patent Office

Office européen
des brevets

# EUROPEAN SEARCH REPORT

Application Number

EP 22 20 2278

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 046 796 A1 (ABU DHABI POLYMERS CO LTD BOROUGE LLC [AE]; BOREALIS AG [AT]) 24 August 2022 (2022-08-24) | 1-5, 12-15 | INV. B32B27/32 B32B27/08 |
| A | * claims 1,2,12,14,15 * * paragraph [0076] * ----- | 6-11 | B65D65/40 |
| A | US 7 794 848 B2 (EQUISTAR CHEM LP [US]) 14 September 2010 (2010-09-14) * claims 1,4,10 * ----- | 1 | |
| A | US 2006/177641 A1 (BREESE D R [US] ET AL) 10 August 2006 (2006-08-10) * claims 1,4 * ----- | 1 | |

**TECHNICAL FIELDS SEARCHED (IPC)**

B32B
B65D

The present search report has been drawn up for all claims

| Place of search | Date of completion of the search | Examiner |
|---|---|---|
| The Hague | 1 March 2023 | Hillebrand, Gerhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 2278

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2023

| Patent document cited in search report | | Publication date | Patent family member(s) | | Publication date |
|---|---|---|---|---|---|
| EP 4046796 | A1 | 24-08-2022 | EP 4046796 | A1 | 24-08-2022 |
| | | | WO 2022175326 | A1 | 25-08-2022 |
| US 7794848 | B2 | 14-09-2010 | AT 555900 | T | 15-05-2012 |
| | | | CN 101594992 | A | 02-12-2009 |
| | | | EP 2106342 | A1 | 07-10-2009 |
| | | | US 2008178768 | A1 | 31-07-2008 |
| | | | WO 2008091321 | A1 | 31-07-2008 |
| US 2006177641 | A1 | 10-08-2006 | CA 2597313 | A1 | 17-08-2006 |
| | | | CN 101111375 | A | 23-01-2008 |
| | | | EP 1851053 | A1 | 07-11-2007 |
| | | | JP 5198074 | B2 | 15-05-2013 |
| | | | JP 2008529845 | A | 07-08-2008 |
| | | | KR 20070106760 | A | 05-11-2007 |
| | | | US 2006177641 | A1 | 10-08-2006 |
| | | | WO 2006086134 | A1 | 17-08-2006 |

EPO FORM P0459

For more details about this annex : see Official Journal of the European Patent Office, No. 12/82

**REFERENCES CITED IN THE DESCRIPTION**

**Patent documents cited in the description**

- WO 2016083208 A
- WO 2020109289 A
- WO 2017021389 A1
- WO 2004000933 A1
- WO 2017055174 A
- EP 2849929 A
- WO 2019081611 A